## Europäisches Patentamt
## European Patent Office
## Office européen des brevets

(19)

(11) Veröffentlichungsnummer : **0 057 936**
**B1**

(12)

# EUROPÄISCHE PATENTSCHRIFT

(45) Veröffentlichungstag der Patentschrift :
07.05.86

(51) Int. Cl.⁴ : **A 01 D 34/63**

(21) Anmeldenummer : **82100940.4**

(22) Anmeldetag : **09.02.82**

(54) Kreiselmäher.

(30) Priorität : 10.02.81 DE 3104723

(43) Veröffentlichungstag der Anmeldung :
18.08.82 Patentblatt 82/33

(45) Bekanntmachung des Hinweises auf die Patenterteilung : 07.05.86 Patentblatt 86/19

(84) Benannte Vertragsstaaten :
AT CH DE FR GB IT LI

(56) Entgegenhaltungen :
CH-A- 97 003
CH-A- 149 925
DE-A- 1 582 352
DE-A- 1 803 807
DE-A- 1 936 054
DE-A- 2 420 398
DE-A- 3 021 500
DE-B- 1 138 573
DE-U- 1 845 630
FR-A- 1 094 356
FR-A- 2 334 286
FR-A- 2 377 755
FR-A- 2 415 953
FR-E- 89 556
GB-A- 610 600
GB-A- 818 303
US-A- 1 536 514
US-A- 3 762 138
US-A- 3 987 607

(73) Patentinhaber : Lesslhumer, Josef
Südtirolerstrasse 42
A-4600 Wels (AT)

(72) Erfinder : Lesslhumer, Josef
Südtirolerstrasse 42
A-4600 Wels (AT)

(74) Vertreter : Lorenz, Eduard et al
Rechtsanwälte Lorenz, Eduard - Seidler, Bernhard
Seidler, Margrit - Gossel, Hans-K. Philipps, Ina, Dr.
Widenmayerstrasse 23
D-8000 München 22 (DE)

**Beschreibung**

Die Erfindung betrifft einen Kreiselmäher nach dem Oberbegriff des Patentanspruchs 1.

Bei einem aus CH-A-97 003 bekannten Kreiselmäher dieser Art besteht die Scheibe aus einem einzigen im wesentlichen ungeschützt gelagerten kreissägeartigen Fräser, so daß nicht nur Verletzungsgefahr besteht, sondern das Mähgut auch streuend abgelegt wird.

Aus der FR-A-1 094 356 ist ein anderer Kreiselmäher bekannt, der mit mehreren Scheiben versehen ist, die über ihren Umfang mit Schneidmessern besetzt sind.

Aufgabe der Erfindung ist es, den bekannten Kreiselmäher dadurch zu verbessern, daß er sich bei großer Betriebssicherheit und geordneter Ablage des Mähguts mit höherer Mähleistung betreiben läßt.

Erfindungsgemäß wird diese Aufgabe durch die kennzeichnenden Merkmale des Patentanspruchs 1 gelöst.

Die Bodenplatte ermöglicht eine robuste, die Schneidmesser kapselnde und schützende Konstruktion, bei der sie im wesentlichen nur im Schnittbereich von dem Schneidgut beansprucht werden. Durch den gegenläufigen Antrieb der Scheiben wird die Ablage des Mähguts in einem Schwad erreicht, wobei die Ausbildung der die Schneidmesser übergreifenden oberen Schenkel den Abfluß des Mähguts begünstigt.

Bei einem aus DE-A-30 21 500 bekannten Kreiselmäher sind zwei gegenläufig angetriebene Scheiben, die mit radial vorstehenden Messern versehen sind, vorgesehen, so daß das Abtrennen des Mähguts durch die Messer ohne Gegenmesser erfolgt und die Messer mit einer extrem hohen Geschwindigkeit rotieren müssen. Für derartige Kreiselmäher sind nicht nur große Antriebsleistungen erforderlich, die Futterpflanzen werden auch weniger abgeschnitten, sondern mehr abgeschlagen, so daß sich ausgefranste Trennstellen ergeben, die die stehenbleibenden Pflanzenreste über den Wurzeln stark austrocknen lassen und dadurch die Anwachsperiode verlängern. Bei dem erfindungsgemäßen Kreiselmäher stützen sich demgegenüber die Halme des Mähguts mit relativ kurzer Stützlänge auf den Schenkeln der Finger ab, so daß die etwa mittig in dem Spalt zwischen den Schenkeln kreisenden Schneidmesser diese mit glattem Schnitt durchtrennen können.

Vorteilhafte Ausgestaltungen der Erfindung sind Gegenstand der Unteransprüche 2 bis 41.

Ausführungsbeispiele der Erfindung werden nachstehend anhand der Zeichnung näher erläutert. In dieser zeigt

Figur 1 eine Rückansicht des Kreiselmähers,

Figur 2 eine Draufsicht auf den Kreiselmäher nach Fig. 1, bei dem die rechte Messerscheibe abgenommen ist,

Figur 3 einen Schnitt durch den Kreiselmäher im Bereich der Messerscheibe,

Figur 4 eine Unteransicht einer schwenkbar angeordneten Messerhalterung mit eingesetztem Schneidmesser,

Figur 5 einen Schnitt durch den Kreiselmäher im Bereich der Messerscheibe mit einer Exzentersteuerung für die Schneidmesser,

Figur 6 eine Draufsicht auf die Exzentersteuerung der Schneidmesser in schematischer Darstellung,

Figur 7 eine perspektivische Darstellung des Messerhalters,

Figur 8 eine Draufsicht auf die Schneidmesserklinge,

Figur 9 einen Schnitt durch einen Kreiselmäher mit Saugluftführung in schematischer Darstellung,

Figur 10 eine Draufsicht auf den Kreiselmäher nach Fig. 9,

Figur 11 eine der Fig. 2 entsprechende Draufsicht auf einen Kreiselmäher anderer Ausführungsform,

Figur 12 eine Seitenansicht des Kreiselmähers nach Fig. 11 im Bereich der Messerscheibe, teilweise im Schnitt,

Figur 13 eine Draufsicht auf einen Ausschnitt der Messerscheibe nach den Fig. 11 und 12 im Bereich eines Messers in vergrößerter Darstellung,

Figur 14 eine Seitenansicht eines Motormähers mit einem Mähwerk nach den Fig. 1 bis 13,

Figur 15 eine Draufsicht auf den Motormäher nach Fig. 14 und

Figur 16 eine Seitenansicht eines Motormähers anderer Ausführungsform.

Das Kreiselmähergestell besteht aus einem oberen Querträger 1 und der Bodenplatte 2, die durch vertikale Achsen bildende Streben 3, 4 zu einem rechteckigen Rahmen miteinander verbunden sind. An der linken Seite des Rahmens ist ein zusätzlicher Stützträger 5 vorgesehen, der der Befestigung des Kreiselmähers beispielsweise an einem Traktor dient.

Auf den Achsen 3, 4 sind Messerscheiben 6, 7 drehbar gelagert, an deren Unterseiten jeweils vier den Messerscheibenrand überragende Schneidmesser 8 befestigt sind.

Mit den Messerscheiben 6, 7 sind kegelstumpfförmige Aufsätze 9, 10 verbunden, auf deren Mänteln spiralförmig verlaufende Stege 11, 12 befestigt sind. Der spiralige Verlauf der Stege 11, 12 ist einander entgegengesetzt. Die kegelstumpfförmigen Aufsätze 9, 10 sind an ihren Oberseiten geschlossen und im Bereich ihrer Oberseiten auf den Achsen 3, 4 drehbar gelagert. Mit der Oberseite des kegelstumpfförmigen Aufsatzes 10 sind zwei übereinanderliegende Keilriemenscheiben 13, 14 verbunden. Mit der Oberseite des kegelstumpfförmigen Aufsatzes 9 ist ein Stirnrad 15 verbunden, das mit einem Stirnrad 16 kämmt, das gleichachsig mit einer Keilriemenscheibe 17 verbunden ist, die in der Ebene der Keilriemenscheibe 14 liegt. Der kegelstumpfförmige Aufsatz 10 wird von dem Keilriemen 18, der über die Keilriemenscheibe 13 läuft, von einer nicht dargestellten Antriebsscheibe angetrieben. Die Keilriemenscheiben 14 und 17 stehen über den Keilriemen 19 miteinander in Antriebsverbindung. Die Stirnradstufe 15, 16 ist zum gegensinnigen Antrieb der Messerscheibe 6 mit gleicher Drehzahl vorgesehen.

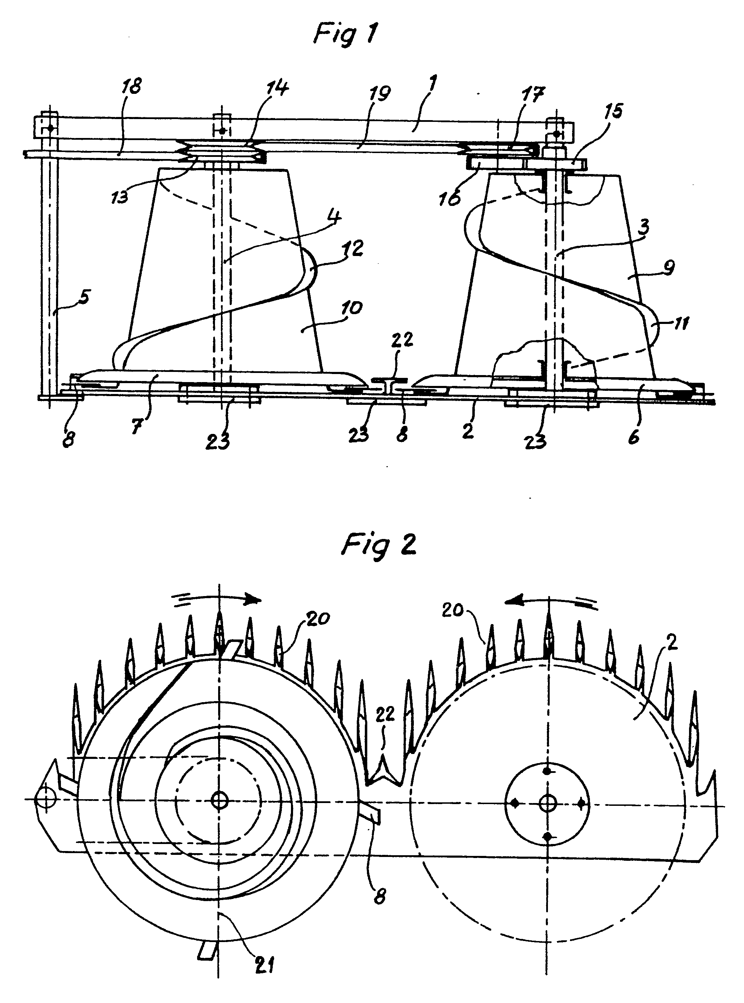

Die Bodenplatte 2 weist, wie aus Fig. 2 ersichtlich ist, in Fahrtrichtung gesehen zwei halbkreisförmige Ausbuchtungen auf, und besitzt eine geradlinige hintere Abschlußkante. An den halbkreisförmigen Vorderkanten der Bodenplatte 2 sind Finger 20 angeordnet, die zu der in Mährichtung weisenden Durchmesserlinie 21 der Scheiben 6, 7 parallel angeordnet sind. Die in Gruppen angeordneten Finger 20 weisen in dem mittleren Bereich der halbkreisförmigen Ausbuchtungen der Bodenplatte 2 einen etwa gleichen Abstand voneinander auf. In den Seitenbereichen der halbkreisförmigen Ausbuchtungen wird der Abstand geringer, während die Finger länger werden.

In dem Zwickel zwischen den halbkreisförmigen Ausbuchtungen der Bodenplatte ist ein dreiecksförmiger kurzer Finger 22 angeordnet.

An der Bodenplatte 2 sind in Mährichtung verlaufende Kufen oder Schleifsohlen 23 befestigt.

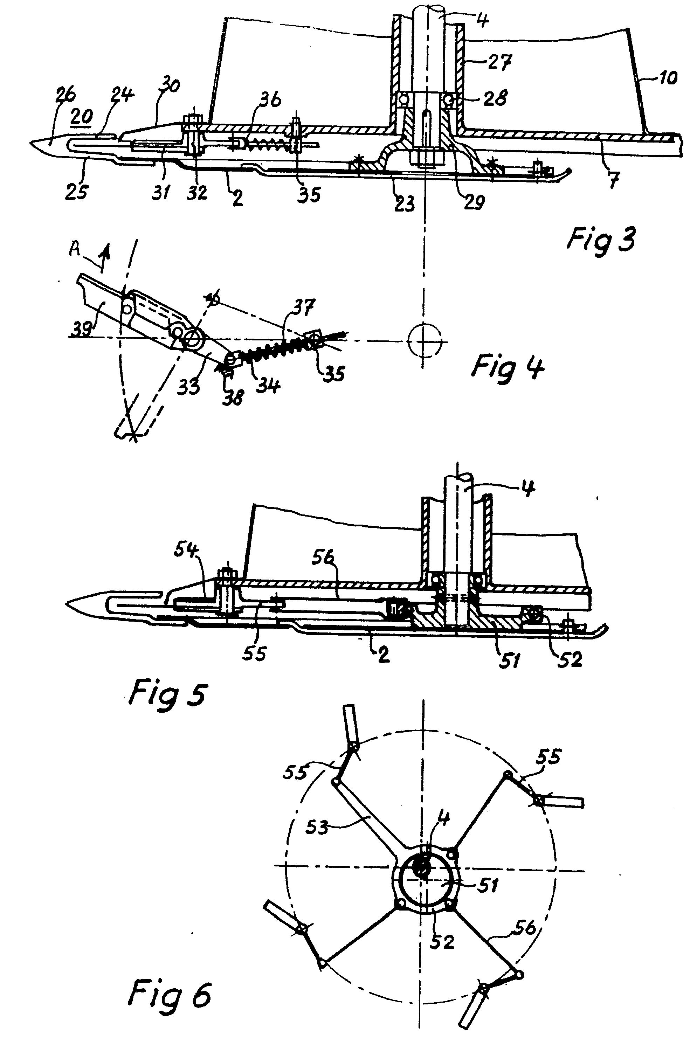

Wie aus Fig. 3 ersichtlich ist, sind die Finger 20 U-förmig ausgebildet, wobei deren Schenkel 24, 25 in vertikaler Richtung übereinander liegen. Der untere Schenkel 25 ist länger ausgebildet und an der Bodenplatte 2 befestigt. Der die Schenkel 24, 25 verbindende Steg 26 läuft in Mährichtung gesehen spitz aus.

Die Messerscheibe 7 ist mit einem zentralen Rohr 27 verschweißt, an dessen oberem Ende auch die Deckplatte des kegelstumpfförmigen Aufsatzes 10 befestigt ist. Das Rohr 27 ist über Kugellager 28 auf der Achse 4 gelagert. Die Bodenplatte 3 ist über ein Verbindungsstück 29 mit der Achse 4 verschraubt.

An dem Rand der Messerscheibe 7 ist eine kreisringscheibenförmige und an ihrem äußeren Rand nach unten umgebördelte Abdeckung 30 befestigt, die die Messerhalterung 31 übergreift und kurz vor den freien Enden der Schenkel 24 der Finger 20 endet.

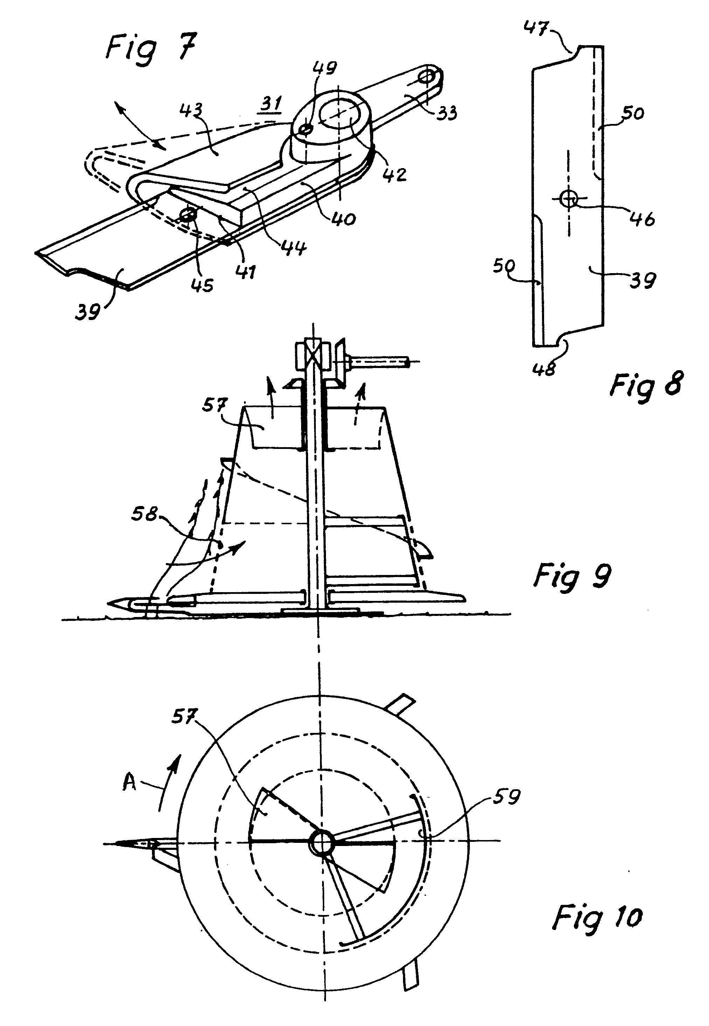

Um eine Zerstörung der Schneidmesser beim Auftreffen auf Hindernisse oder Festklemmen von Gegenständen zu verhindern, sind die Messerhalterungen 31 in der aus Fig. 4 ersichtlichen Weise schwenkbar ausgebildet. Die Messerhalterung 31, deren Ausgestaltung später noch anhand der Fig. 7 näher erläutert wird, weist die Gestalt eines zweiarmigen Hebels auf, der auf der Unterseite der Messerscheiben 6, 7 um die Zapfen 32 schwenkbar gelagert ist. Der die Zapfen 32 überragende Hebelarm 33 ist an seinem freien Ende gelenkig mit dem Hebel 34 verbunden. Der Hebel 34 besteht aus einer Stange, die in der schwenkbar gelagerten Buchse 35 längsverschieblich geführt ist. Zwischen dem gegabelten Kopf 36 des Hebels 34 und der auf der Messerscheibe 7 schwenkbar gelagerten Buchse 35 ist eine Druckfeder 37 mit Vorspannung eingespannt. In der aus Fig. 4 in vollen Linien dargestellten Schneidstellung drückt die Druckfeder 37 die durch den Gabelkopf 36 gebildete gelenkige Verbindung des Hebelarms 33 mit dem Hebel 34 gegen einen auf der Unterseite der Messerscheibe 7 vorgesehenen Anschlag 38. Trifft auf die Messerklinge 39 ein Widerstand, schwenkt der durch den Hebelarm 33, den Hebel 34 und die Druckfeder 37 gebildete Kniehebelmechanismus durch seine Totpunktlage in die gestrichelt dargestellte Lage, in der das Schneidmesser aus seiner Schnittstellung herausbewegt ist.

Aus Fig. 7 ist der Aufbau der Messerhalterung 31 näher ersichtlich. Die Messerhalterung besteht aus dem Hebelarm 33 und dem den anderen Hebelarm bildenden plattenförmigen Stützteil 40, das eine ebene Vorderseite 41 aufweist, gegen die die Messerklinge 39 plan anliegt. Um die Schwenkachse des Messerhalters, die durch die Lagerbohrung 42 verläuft, ist das im Querschnitt U-förmige Halteteil 43 schwenkbar gelagert. Das Stützteil 40 weist auf seiner Rückseite eine keilförmige Schrägfläche 44 auf, durch die der untere Schenkel des Halteteils 43 gegen die Planseite 41 des Stützteils 40 gespannt wird, wenn der obere Schenkel des Halteteils 43 über die keilförmige Fläche 44 in Richtung auf das hintere Ende des Stützteils 40 geschoben wird. Auf der Innenseite des unteren Schenkels des Halteteils 43 ist ein Zapfen 45 befestigt, der durch die mittige Bohrung 46 der Messerklinge 49 greift. Die Messerklinge 39 ist an ihren oberen und unteren Enden mit Aussparungen 47, 48 versehen, die Anschläge bilden. Im hinteren Bereich des Stützteils ist ein Zapfen 49 vorgesehen, der den Gegenanschlag für die Aussparungen 47 oder 48 darstellt. Zum Befestigen der Messerklingen 39 in der Messerhalterung 31 ist es lediglich erforderlich, im gestrichelt dargestellten ausgeschwenkten Zustand des Halteteils die Messerklinge mit ihrer mittleren Bohrung 46 auf den Zapfen 45 einzulegen und sodann das Halteteil 43 in Richtung auf das Stützteil 40 zu verschwenken, bis die Messerklinge 39 zwischen den Zapfen 45 und 49 abgestützt und zwischen der Planseite 41 des Stützteils 40 und dem unteren Schenkel des Halteteils 43 festgeklemmt ist. Zum Lösen der Messerklinge 39 ist es lediglich erforderlich, auf deren Rücken einen leichten Schlag auszuüben.

Wie aus Fig. 8 ersichtlich ist, weist die Messerklinge eine im wesentlichen rechteckige Form auf und ist auf gegenüberliegenden Seiten mit zueinander versetzten Schneiden 50 versehen.

Um einen besseren Schnitt insbesondere im Einlaufbereich der Messer in die Fingergruppe zu gewährleisten, ist es zweckmäßig, die Schneidmesser in Drehrichtung leicht nach vorn zu neigen. Im mittleren und endseitigen Bereich der Fingergruppen ist es hingegen zweckmäßig, daß die Schneidmesser eine etwa radiale oder sogar leicht nach hinten geneigte Stellung einnehmen. Um über den Schnittbereich eine möglichst günstige Messerstellung zu erreichen, ist die Stellung der Messer in der aus Fig. 5 und 6 ersichtlichen Weise durch einen Exzenter gesteuert. Die Exzentersteuerung besteht aus einer kreisrunden Steuerscheibe 51, die exzentrisch zur Achse 4, 5 angeordnet ist. Auf der Steuerscheibe 51 ist über Kugellager der Steuerring 52 gelagert, der starr mit einem Hebel 53 verbunden ist. Die Messerhalterung 54 ist wiederum als zweiarmiger Hebel ausgebildet, wobei der Hebelarm 55 an das Ende des Hebels 53 angelenkt ist. Die Hebelarme 55 der anderen Messerhalter 54 sind über Koppelstangen 56, die an den Steuerring 52 angelenkt sind, gelenkig mit dem Steuerring 52 verbunden. Durch entsprechende Anordnung der exzentrischen Scheibe 51 und Wahl der Länge und Stellung der Hebel und Koppeln läßt sich die gewünschte Stellung der Schneidmesser über den Schnittbereich einstellen.

Eine günstige Gutablagerung läßt sich erreichen, wenn die kegelstumpfförmigen Aufsätze 9, 10 zusätzlich mit einer Saugluftführung versehen sind. Zu diesem Zwecke sind, wie aus den Fig. 9 und 10 ersichtlich, im oberen Bereich der kegelstumpfförmigen Aufsätze 9, 10 Lüfterflügel 57 vorgesehen. Diese Lüfterflügel 57 saugen Luft durch den unteren perforierten Bereich 58 der kegelstumpfförmigen Aufsätze an. Um die Wirkung der Saugluft im Abgabebereich des Gutes aufzuheben, ist der perforierte Bereich in diesem Abgabebereich durch einen Schirm 59 abgedeckt.

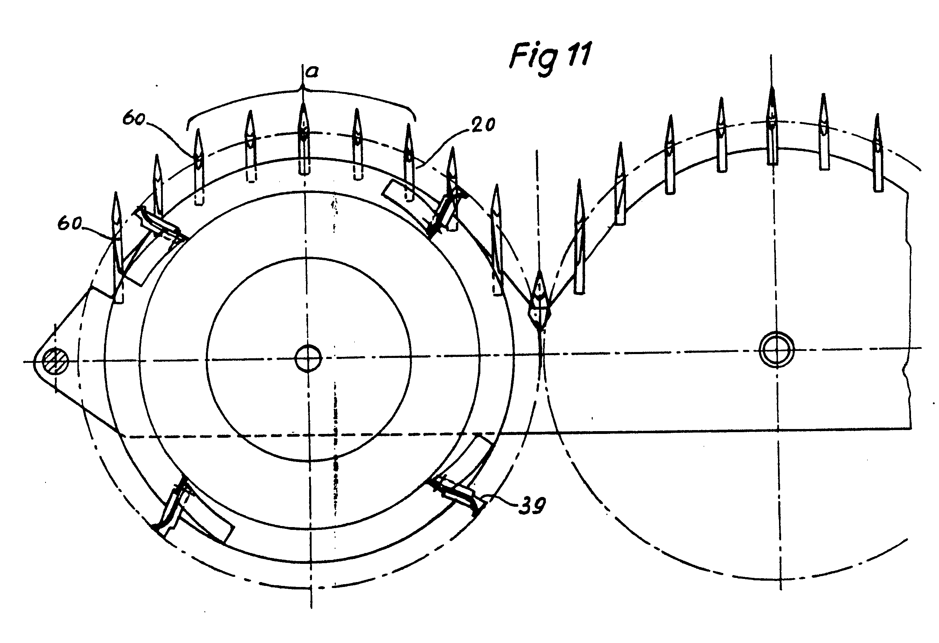

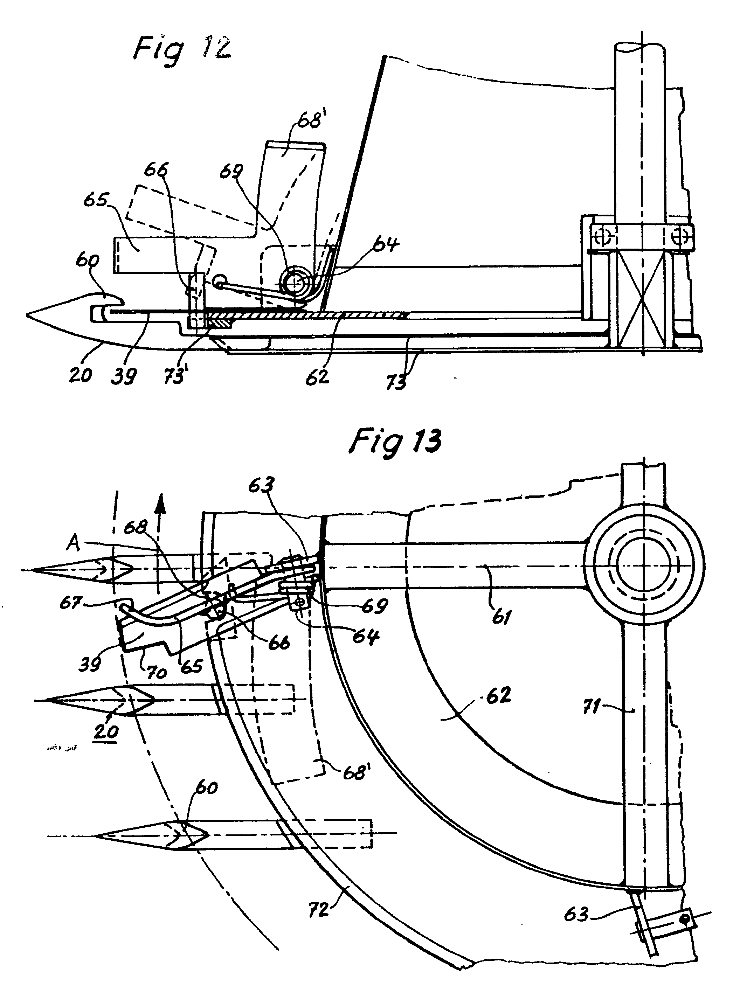

Bei dem in den Fig. 11 bis 13 dargestellten Kreiselmäher sind die Schneiden der Schneidmesser 39 in Drehrichtung A nacheilend angeordnet, so daß ein guter Selbstreinigungseffekt der Schneidmesser 39 eintritt. Die Schneiden der Schneidmesser 39 schließen, wie aus Fig. 13 ersichtlich ist, mit der Durchmesserlinie 61 der Messerscheibe 62 einen spitzen Winkel von etwa 20-25° ein.

Wie aus Fig. 11 ersichtlich ist, weisen die Finger 20 an den Seiten des Schneidbereichs längere obere Schenkel 60 auf, während die oberen Schenkel 60 in dem mittleren Bereich a nur sehr kurz ausgebildet sind, um einen guten Abfluß des Gutes nicht zu behindern. Die längeren oberen Schenkel an den Seiten des Schneidbereiches laufen nach hinten spitz aus.

Die Schneidmesser 39 sind auf der Oberseite der Messerscheibe in der aus den Fig. 12 und 13 ersichtlichen Weise befestigt. Auf der Messerscheibe 62 ist rechtwinkelig ein stegförmiges Tragstück 63 aufgeschweißt, dessen Mittelebene mit der Durchmesserlinie 61 der Messerscheibe einen spitzen Winkel einschließt. Parallel zur Messerscheibe 62 ist an dem Tragstück 63 ein Lagerbolzen 64 befestigt, auf dem schwenkbar der Verriegelungshebel 65 gelagert ist, der einen Verriegelungsbolzen 66 trägt. Der Verriegelungshebel 65 besteht aus einem Flacheisen und ist an seinem vorderen Ende 67 in Drehrichtung A abgebogen. Der Verriegelungsbolzen 66 greift zur Befestigung des Messers 39 durch dessen mittlere Bohrung und liegt im verriegelnden Zustand in einer Randausnehmung 68 der Messerscheibe 62.

Im hinteren Bereich ist auf den Verriegelungshebel 65 ein gekrümmtes Flacheisen 68' aufgeschweißt, das flügelartig entgegen der Drehrichtung A gekrümmt ist.

Auf den Lagerbolzen 64 sind die Windungen einer Schenkeltorsionsfeder 69 aufgeschoben, deren Schenkel sich einerseits auf der Wandung des Zylinders und andererseits auf den Verriegelungshebel 65 abstützen und diesen in seine Verriegelungsstellung drücken.

Das Schneidmesser 39 ist symmetrisch aufgebaut und weist wechselweise Anschlagflächen 70 auf, von denen jeweils eine an dem Tragstück 63 anliegt.

Die Messerscheibe 62 besteht aus einem scheibenförmigen Ring, der mit den Enden von speichenartigen Trägern 71 verbunden ist.

Die Messerhalterungen sind jeweils in den Endbereichen der Träger 71 angeordnet.

Die Umfangsränder des ringförmigen Teils der Messerscheibe 62 sind mit Abschrägungen 72 versehen.

Zur Versteifung der Bodenplatte 73 ist diese als verripter Hohlkörper ausgebildet, in den die Finger 20 eingesetzt sind.

An der Unterseite des die Messerscheibe 62 bildenden Ringes sind im Bereich der Messer 39 Verstärkungen 73' vorgesehen, die durch eine schräggestellte Stirnfläche das Eindringen von Gräsern oder Erdkrumen verhindern.

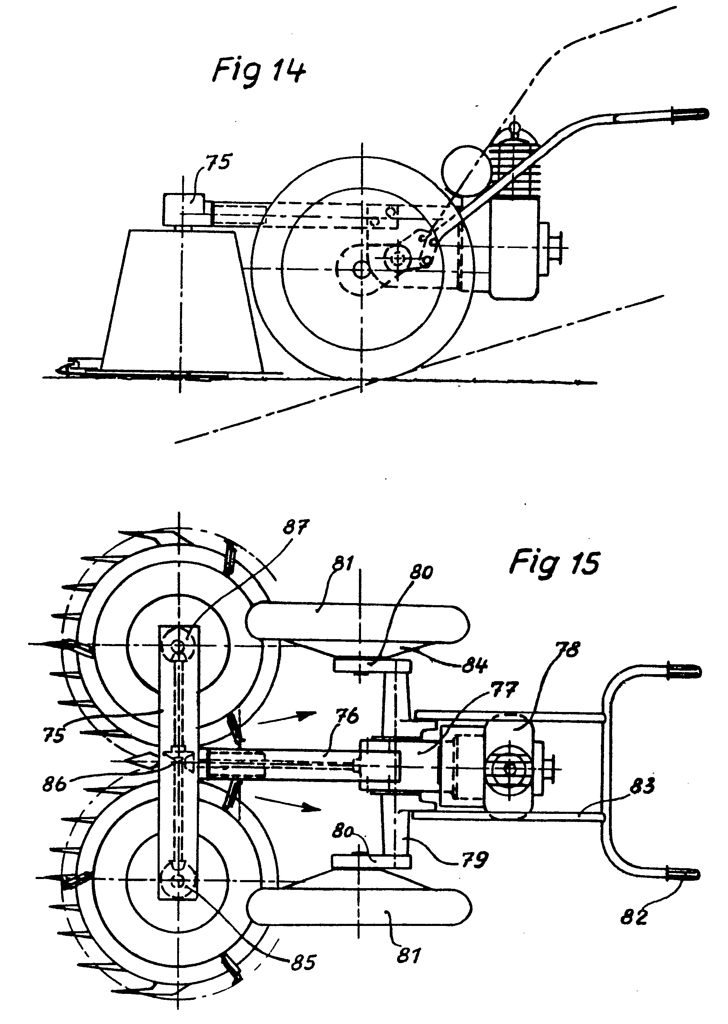

Bei dem in den Fig. 14 bis 16 gezeigten Motormäher ist mittig mit dem oberen Träger 75 des Mähwerks ein zentraler Träger 76 verbunden, der an den Motor- und Getriebeblock 77 des Motors 78 angeschraubt ist. Der Motorblock 77 ist auf der Achse 79 befestigt, die mit abgewinkelten Schenkeln 80 versehen ist, in denen die Räder 81 gelagert sind. Mit dem Motorblock 77 ist weiterhin ein mit Handgriffen 82 versehener Bügel 83 verbunden.

Die Räder 81 weisen von den Messerscheiben nur einen geringen Abstand auf, wobei die Spurweite der Räder derart bemessen ist, daß deren Innenseiten etwa in der Mitte der die Messerscheiben abdeckenden Aufsätze liegen. Durch die Messerscheibenachsen parallel zu den Rädern 81 gezogene Linien laufen also dicht an den Innenseiten der Räder vorbei.

Die Spurweite kann natürlich auch entsprechend der Breite des gewünschten Mähschwades breiter gewählt werden. Eine breitere Spur ermöglicht eine einfachere Handhabung bei Hanglagen, da steilere Hänge durchwegs in der Schichtenlinie gemäht werden.

Die Innenseiten der Läufräder sind jeweils mit ebenen oder konisch geformten Scheiben 84 abgedeckt, die bis an den inneren Rand der Reifen reichen. Zweckmäßigerweise ist der jeweilige Felgendiskus mit den Innenseiten der Felgen verbunden und geschlossen ausgeführt. Durch die durch die Scheiben geschaffenen Begrenzungen kann das Mähgut von den Läufrädern nicht mitgenommen werden und die Drehbewegung der Räder begünstigt zusätzlich den Abfluß des Mähgutes.

Der Antrieb der Laufräder 81 ist in der bei Motormähern üblichen Weise ausgeführt. Die beiden Halbachsen der Räder sind wegen der großen Spurweite über ein Differential-getriebe angetrieben. Vorzugsweise ist das Getriebe mit einer Differentialsperre versehen, um in besonders steilen Hanglagen ein Abdriften zu vermeiden.

Ein mit der Radachse 79 oder mit dem Getriebekasten 77 fest verbundener Ausleger in Form des Trägers 76 trägt das Mähwerk am oberen Querträger und nimmt den Antrieb auf. Der Ausleger 76 ist zweiteilig ausgeführt und läßt eine begrenzte Pendelbewegung des Mähwerks um die Längsachse zu, so daß beide Laufräder immer mit dem Boden in Eingriff sind. Über drei in dem oberen Querträger 75 untergebrachte Winkelgetriebe 85, 86, 87, die zweckmäßigerweise einheitlicher Größe sind, werden die Messerscheiben gegenläufig angetrieben. Der Antrieb der Messerscheiben kann natürlich auch von einem zentralen Doppelwinkelgetriebe mittels Keilriemen oder Ketten erfolgen.

Der Antriebsmotor 78 mit Untersetzungs- und Fahrwerksgetriebe 77 sowie der Handlenker 82, 83 zur Führung des Motormähers sind auf der gegenüberliegenden Seite des Mähwerkes angeordnet und bilden einen Gewichtsausgleich zu diesem. Zur leichten Führung des Motormähers ist die Gewichtsverteilung so gewählt, daß der Schwerpunkt der von der Achse 79 getragenen Teile auf der Seite des Mähwerks liegt. Um diese Gewichtsverteilung bei beliebigen Mähbreiten und Antriebsleistungen zu gewährleisten, sind die Antriebsachsen beidseits an den Laufrädern über Vorgelege angetrieben, die in den gehäuseartigen Schenkeln 80 angeordnet sind.

Mit dem Handlenker 82, 83 wird der Motormäher bei geringem Auflagedruck des Mähwerkes geführt.

Für die Straßenfahrt wird durch Verstellen der Höhenlage des Handlenkers und der damit verbundenen Kippbewegung um die Laufräder eine geringe Bodenfreiheit des Mähwerkes erreicht, die zur Überwindung geringerer Wegstrecken ausreichend ist. Für längere Wegstrecken werden Motormäher üblicherweise auf einem Fahrzeug verladen und transportiert.

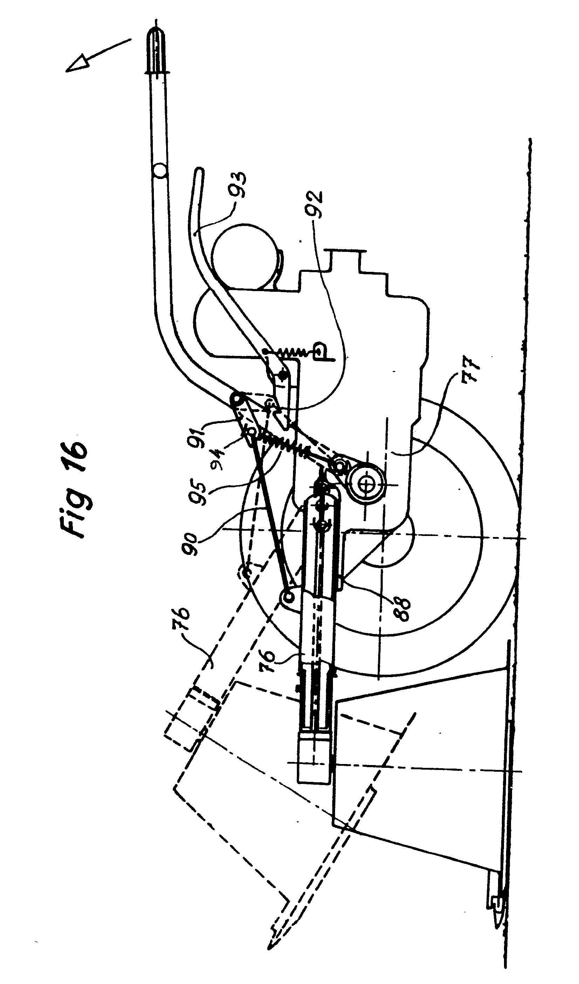

In Fig. 16 ist eine besondere Ausführungsform eines Motormähers dargestellt, der sich in einfacher Weise auf den Straßentransport umrüsten läßt. Der Mähwerksausleger 76 ist im Bereich oberhalb der Triebachse koaxial zu dieser nach oben beweglich angelenkt und stützt sich in seiner Arbeitsstellung auf einer mit dem Getriebe 77 fest verbundenen Auflage 88 ab. Die in dem Ausleger 76 verlaufende Antriebswelle des Mähwerks besitzt im Anlenkpunkt des Auslegers 76 ein Doppelkreuzgelenk 89.

Mit einem fast gestreckten, federbelasteten Kniehebel, der einen langen Hebelteil 90 und einen kurzen Hebelteil 91 aufweist, ist der Ausleger auf seiner Auflage 88 in seiner Betriebsstellung gehalten. Der lange Kniehebelteil 90 ist am Ausleger 76 und der kurze Kniehebelteil 91 ist am Getriebegehäuse 77 oder am Handlenker gelagert. Durch Hochdrücken des Handlenkers knickt das Gerät um die Anlenkachse des Mähwerkauslegers ein und der kurze Kniehebelteil 91 rastet selbsttätig in einer Rastausnehmung 92 ein, die im vorderen Bereich des kürzeren Hebelarms eines federbelasteten zweiarmigen Hebels 93 vorgesehen ist. Um ein selbsttätiges Einrasten zu ermöglichen, sind die Vorderseiten des kürzeren Kniehebels 91 und des kürzeren Hebelarms des doppelarmigen Hebels 93 gegensinnig abgeschrägt.

Beim Zurückführen des Handlenkers in seine Normalstellung wird das Mähwerk vom Boden abgehoben und in eine Stellung mit ausreichendem Bodenabstand gebracht, in der der Straßentransport möglich ist. Die Straßentransportstellung ist in Fig. 16 gestrichelt dargestellt.

Die im Kniehebelgelenk 94 angreifende Kraft der Feder 95 ist dabei so gerichtet, daß diese in der Arbeitsstellung des Mähwerks und in der Straßentransportstellung mit dem kurzen Kniehebelteil jeweils einen stumpfen Winkel einschließt und bei der Knickbewegung eine mit dem kurzen Kniehebelteil 91 fluchtende Linie durchläuft.

Zum Überführen des Motormähers in die Arbeitsstellung wird das Mähwerk auf dem Boden abgesetzt und die Arretierung des kurzen Kniehebelteils 91 durch den als Handhebel ausgebildeten zweiarmigen Hebel 93 gelöst.

Anschließend wird der Handlenker nach unten in seine Normalstellung geschwenkt, wobei sich der Mähwerksausleger 76 wieder auf seine Auflage 88 abstützt und der federbelastete Kniehebel 90, 91 seine fast gestreckte Stellung einnimmt. Das Lösen der Arretierung 92 kann auch vom Handgriff des Lenkers aus mittels eines Bowdenzuges oder dergleichen erfolgen.

Bei der Straßenfahrt werden die Finger und Messer des Mähwerks mit einem aufsteckbaren Schutz abgedeckt. Dieser Schutz kann mit zwei schwenkbaren Stützrollen versehen sein, so daß bei längeren Straßenfahrten die Bedienungsperson entlastet ist.

**Patentansprüche**

1. Kreiselmäher mit mindestens einer in dessen rahmenförmigem Gestell (1, 2, 3, 5) gelagerten und um eine im wesentlichen vertikale Achse (3, 4) rotierend angetriebenen Scheibe (6, 7), die über ihren Umfang in gleichen Abständen mit den Scheibenradius überragenden Schneidmessern (8) besetzt ist, mit am Gestell im Bereich der vorderen Hälfte der Scheibe (6, 7) befestigten, den von den Schneidmessern (8) beschriebenen vorderen Halbkreis überlappenden, im wesentlichen in Schneidrichtung weisenden und mit den Schneidmessern (8) zusammenwirkenden Zähnen, die aus im Abstand voneinander parallel zu der in Mährichtung weisenden Durchmesserlinie der Scheibe (6, 7) angeordneten U-förmigen Fingern (20) bestehen, deren Schenkel (24, 25) in vertikaler Richtung übereinander liegen und von denen ein Schenkel (25) an einem gestellfesten Träger (2) befestigt ist, wobei die Schenkel den von den Schneidmessern (8) beschriebenen Kreisring mit außenliegenden Verbindungsstegen (26) gabelförmig einfassen und von den Schneidmessern (8) einen so großen Abstand aufweisen, daß sich diese berührungsfrei zwischen den Schenkeln (24, 25) hindurchbewegen können, dadurch gekennzeichnet, daß zwei gegenläufig angetriebene Scheiben (6, 7) und eine gestellfeste, den Träger bildende Bodenplatte (2) vorgesehen sind, daß die Bodenplatte (2) mit vorderen halbkreisförmigen Ausbuchtungen versehen ist, deren Radius größer ist als der der Messerscheiben (6, 7), und daß die die Schneidmesser (8, 39) übergreifenden oberen Schenkel (24, 60) der Finger (20) im mittleren Bereich (a) des Schneidbereichs kürzer als an den Randbereichen des Schneidbereichs ausgebildet sind oder ganz entfallen.

2. Kreiselmäher nach Anspruch 1, dadurch gekennzeichnet, daß der bodenseitige Träger oder die Bodenplatte (2) mit zu den Findern (20) parallelen Gleitkufen (23) oder mit Gleitsohlen versehen ist.

3. Kreiselmäher nach Anspruch 1 oder 2, dadurch gekennzeichnet, daß die unteren Schenkel (25) der Finger (20) an der Bodenplatte (2) befestigt sind.

4. Kreiselmäher nach einem der Ansprüche 1 bis 3, dadurch gekennzeichnet, daß der die Schenkel (24, 25) verbindende Steg (26) der Finger (20) in Fahrtrichtung (Mährichtung) spitz auslaufend ausgebildet ist.

5. Kreiselmäher nach einem der Ansprüche 1 bis 4, dadurch gekennzeichnet, daß der zwischen den Schenkeln (24, 25) gebildete Schlitz eine Höhe aufweist, die etwa 1/4 bis 1/3 des Abstandes der Finger voneinander beträgt.

6. Kreiselmäher nach einem der Ansprüche 1 bis 5, dadurch gekennzeichnet, daß die Finger (20) im mittleren Bereich des von den Schneidmessern (39) beschriebenen vorderen Halbkreises in etwa einen gleichen Abstand und in den seitlichen Bereichen einen geringeren Abstand voneinander und eine größere Länge aufweisen.

7. Kreiselmäher nach einem der Ansprüche 1 bis 6, dadurch gekennzeichnet, daß zwischen den gegensinnig rotierenden Scheiben (6, 7) in dem durch die sich nahezu berührenden oder leicht überschneidenden Messerkreise gebildeten Zwickel ein mittlerer, kürzer ausgebildeter Finger (22) angeordnet ist, dessen den Messerschlitz begrenzenden Schenkel schräg auf die benachbarten Finger zulaufende Kanten aufweisen.

8. Kreiselmäher nach einem der Ansprüche 1 bis 7, dadurch gekennzeichnet, daß am Umfang der Scheibe (6, 7) mindestens drei Schneidmesser (39) etwa parallel zur Bodenplatte (2) angeordnet sind, deren Schneiden (50) mit der Tangente ihres Fußkreises einen spitzen Winkel einschließen und etwa in der Mitte zwischen den Schenkeln (24, 25) der Finger (20) liegen.

9. Kreiselmäher nach einem der Ansprüche 1 bis 8, dadurch gekennzeichnet, daß die Messerhalter (31) gelenkig mit der Scheibe (6, 7) verbunden und durch einen Exzenter (51) derart gesteuert sind, daß die Messerschneiden (50) im Einlaufbereich der Fingerreihen mit der Tangente des Fußkreises der Schneidmesser einen spitzen Winkel einschließen und im mittleren Bereich eine etwa radiale Stellung einnehmen.

10. Kreiselmäher nach einem der Ansprüche 1 bis 9, dadurch gekennzeichnet, daß zur Steuerung der Messerhalter (31) ein zur Drehachse (3, 4) der Messerscheibe (6, 7) exzentrisch gelagerter Steuerring (52) mit einem mit diesem starr verbundenen Arm (53) vorgesehen ist, dessen Ende mit einem den Messerhalter (54) verschwenkenden Steuerhebel (55) gelenkig verbunden ist, und daß die Steuerhebel (55) der übrigen Schneidmesserhalter (54) mit Armen (56) gelenkig verbunden sind, deren anderen Enden an dem Steuerring (52) angelenkt sind.

11. Kreiselmäher nach einem der Ansprüche 1 bis 10, dadurch gekennzeichnet, daß die Schneidmesser (39) in je einem Messerhalter (31) gehalten sind, der aus einem plattenförmigen Stützteil (40) mit einer ebenen Vorderseite (41), gegen die die Messerklinge (39) anliegt, und einer keilförmig abgeschrägten Rückseite (44) und aus einem mit dem Stützteil (40) schwenkbar verbundenen Halteteil (43) besteht, dass das Halteteil (43) im Querschnitt U-förmig ausgebildet und derart über das Stützteil (44) bewegbar ist, daß sein einer Schenkel beim Gleiten über die abgeschrägte Fläche (44) den anderen Schenkel gegen die Vorderseite (41) des Stützteils (40) spannt und die Messerklinge (39) zwischen dem Stützteil (40) und dem anderen Schenkel festklemmt, daß das Stützteil (40) im Bereich der Schwenkachse des Halteteils (43) mit einem Anschlag (49) für die Klinge (39) und die Klinge (39) mit einer Bohrung versehen ist, in die ein auf dem anderen Schenkel des Halteteils (43) befestigter Bolzen (45) greift.

12. Kreiselmäher nach einem der Ansprüche 1 bis 11, dadurch gekennzeichnet, daß die Schneidmesser aus dünnen Stahlklingen (39) bestehen, die angenähert rechteckige Form besitzen und in ihrer Mitte eine Bohrung (46) aufweisen, daß die Enden der Klingen (39) mit Anschläge bildenden Ausnehmungen (47, 48) versehen sind und daß zwei versetzt gegenüberliegende Längsseiten als Schneiden (50) ausgebildet sind.

13. Kreiselmäher nach einem der Ansprüche 1 bis 12, dadurch gekennzeichnet, daß die Messerhalter (31) um Zapfen (32) der Messerscheibe (6, 7) gelenkig gelagert und mit einem den Zapfen (32) überragenden Hebelarm (33) versehen sind, der gelenkig mit einem Hebel (34) verbunden ist, der in seiner Schwenklagerung (35) axial verschieblich geführt ist, und daß die gelenkige Verbindung beider Hebel (33, 34) federnd gegen einen scheibenfesten Anschlag (38) gehalten ist.

14. Kreiselmäher nach einem der Ansprüche 1 bis 13, dadurch gekennzeichnet, daß die Messerscheibe (6, 7) oder ein die Messerscheibe abdeckendes Blech (30) bis unmittelbar an die freien Enden der oberen Schenkel (24) der Finger (20), die der Kreisform angepaßt sind, heranreichen und der Rand der Messerscheibe bzw. des Abdeckbleches nach unten gegen die Bodenplatte (2) weisend umgebogen ist.

15. Kreiselmäher nach einem der Ansprüche 1 bis 14, dadurch gekennzeichnet, daß die Messerscheiben kreisrunde oder vieleckige, nach oben konisch verjüngte Aufsätze (9, 10) aufweisen und die Antriebseinrichtungen oberhalb dieser Aufsätze angeordnet sind.

16. Kreiselmäher nach einem der Ansprüche 1 bis 15, dadurch gekennzeichnet, daß die konischen Aufsätze radial abstehende Rippen oder in Umlaufrichtung spiralig ansteigende Stege (11, 12) aufweisen, die über den Rand der Messerscheibe bzw. des Abdeckbleches geführt sind.

17. Kreiselmäher nach einem der Ansprüche 1 bis 16, dadurch gekennzeichnet, daß am Umfang der konischen Aufsätze unmittelbar über der Messerscheibe Durchbrüche angeordnet sind, die an der Innenseite etwa auf einem Drittel des Umfangs durch einen feststehenden Schirm (59) abgedeckt sind und daß innen im darüberliegenden Teil des Aufsatzes (9, 10) wenigstens zwei Lüfterflügel (57) angebracht sind.

18. Kreiselmäher nach einem der Ansprüche 1 bis 17, dadurch gekennzeichnet, daß an der Unterseite der Bodenplatte (2) zwei oder mehrere einsteckbare und mit einem Vorstecker gesicherte Schleifsohlen befestigt sind.

19. Kreiselmäher nach einem der Ansprüche 1 bis 18, dadurch gekennzeichnet, daß am oberen Träger (1) in Bezug auf die Fahrtrichtung neigungsverstellbare Schwadformer befestigbar sind, die unmittelbar an die Mäntel der Aufsätze (9, 10) heranreichen.

20. Kreiselmäher nach einem der Ansprüche 1 bis 19, dadurch gekennzeichnet, daß am Rahmen bzw. an einem seitlichen Stützträger (5) Bolzen oder Bohrungen oder dergleichen für den Anschluß an die Fahrachse eines Motorgeräts oder an einen Schlepperhubwerksrahmen vorgesehen sind.

21. Kreiselmäher nach einem der Ansprüche 1 bis 20, dadurch gekennzeichnet, daß die Messer (39) auf der Oberseite der Messerscheibe (62) befestigt sind.

22. Kreiselmäher nach Anspruch 21, dadurch gekennzeichnet, daß zur Halterung jedes Messers (39) mit der Messerscheibe (62) jeweils ein etwa radial und rechtwinkelig auf dieser stehendes stegartiges Tragstück (63) verbunden ist, auf das sich das Messer mit seiner hinteren Anschlagfläche (70) abstützt und das einen zur Messerscheibe (62) parallelen Lagerbolzen (64) trägt, auf dem ein in Richtung auf die Messerscheibe (62) federbelasteter Schwenkhebel (65) gelagert ist, der mit einem Verriegelungsbolzen (66) versehen ist, der durch eine mittlere Bohrung des Messers (39) und zu dessen Verriegelung in eine Randausnehmung (68) oder eine Bohrung der Messerscheibe (62) greift.

23. Kreiselmäher nach Anspruch 21 oder 22, dadurch gekennzeichnet, daß der Schwenkhebel (65) aus einem an seinem äußeren Ende (67) in Drehrichtung gekrümmten Flacheisen besteht.

24. Kreiselmäher nach einem der Ansprüche 21 bis 23, dadurch gekennzeichnet, daß mit der Oberseite des Schwenkhebels (65) ein entgegen der Drehrichtung (A) gekrümmtes flügelartiges Flacheisen (68') verbunden ist.

25. Kreiselmäher nach einem der Ansprüche 21 bis 24, dadurch gekennzeichnet, daß die Schneiden der Messer (39) eine der Drehrichtung nacheilende Lage einnehmen.

26. Kreiselmäher nach Anspruch 25, dadurch gekennzeichnet, daß die Schneiden der Messer (39) mit einer Durchmesserlinie (61) der Messerscheibe (62) einen Winkel von etwa 20-25° einschließen.

27. Kreiselmäher nach einem der Ansprüche 21 bis 26, dadurch gekennzeichnet, daß der Umfangsrand der Messerscheibe (62) spitz auslaufend abgeschrägt ist.

28. Kreiselmäher nach einem der Ansprüche 21 bis 27, dadurch gekennzeichnet, daß an der Unterseite der Messerscheibe (62) Abweiser angeordnet sind.

29. Kreiselmäher nach einem der Ansprüche 21 bis 28, dadurch gekennzeichnet, daß die Bodenplatte (73) in Richtung auf die Messerscheibe (62) abgeschrägt ist.

30. Kreiselmäher nach einem der vorhergehenden Ansprüche, dadurch gekennzeichnet, daß mit dem oberen Querträger (75) des Mähwerkgestells mittig ein zentraler, einen Ausleger bildender Träger (76) verbunden ist, der mittig auf einer mit zwei von einem Motor (78) angetriebenen Rädern (81) versehenen Radachse (79) befestigt ist, daß in den Trägern (75, 76) die den Antrieb von dem Motor (78) auf die Messerscheiben übertragenden Antriebseinrichtungen angeordnet sind, daß der Abstand der Innenseiten der Räder (81) der Mähschwadbreite entspricht und die Räder unmittelbar den Messerscheiben benachbart sind und daß die Radachse (79) auf ihrer dem Mähwerk gegenüberliegenden Seite mit Handgriffbügeln (82, 83) versehen ist.

31. Kreiselmäher nach Anspruch 30, dadurch gekennzeichnet, daß die Innenseiten der Räder (81) trichterförmige oder scheibenförmige Abdeckungen aufweisen, deren Umfangsränder im Bereich der Innenseiten der Bereifungen an deren Felgen angeschlossen sind.

32. Kreiselmäher nach Anspruch 31, dadurch gekennzeichnet, daß die trichterförmigen Abdeckungen jeweils aus einem Felgendiskus (84) bestehen.

33. Kreiselmäher nach einem der Ansprüche 30 bis 32, dadurch gekennzeichnet, daß die Antriebsachsen der Räder (81) über Vorgelege mit den in der Achse (79) angeordneten Antriebswellen in Antriebsverbindung stehen, die in Schenkeln (80) bildenden Gehäusen angeordnet sind.

34. Kreiselmäher nach einem der Ansprüche 30 bis 33, dadurch gekennzeichnet, daß der mit dem Getriebeblock (77) oder der Radachse (79) verbundene Träger (76) derart zweiteilig ausgebildet ist, daß der eine Teil gegenüber dem anderen begrenzt um die gemeinsame Längsachse verschwenkbar ist.

35. Kreiselmäher nach einem der Ansprüche 30 bis 34, dadurch gekennzeichnet, daß die Antriebseinrichtungen für die Messerscheiben im oberen Querträger (75) des Mähwerks untergebracht sind und der Antrieb über drei Winkelgetriebe (85, 86, 87) erfolgt, die vorzugsweise einheitlich ausgebildet sind.

36. Kreiselmäher nach einem der Ansprüche 30 bis 35, dadurch gekennzeichnet, daß der Träger (76) oberhalb der Radachse (79) schwenkbar gelagert ist und die Antriebswelle im Gelenk ein Doppelkreuzgelenk (89) besitzt.

37. Kreiselmäher nach einem der Ansprüche 30 bis 36, dadurch gekennzeichnet, daß der Ausleger (76) in der Arbeitsstellung des Mähwerks auf einer mit der Radachse (79) oder dem Getriebeblock (77) fest verbundenen Auflage (88) abgestützt ist und von einem fast gestreckten, federbelasteten Kniehebel (90, 91) in Anlage gegen die Auflage (88) gehalten ist.

38. Kreiselmäher nach Anspruch 37, dadurch gekennzeichnet, daß der Kniehebel aus zwei ungleichlangen Hebeln (90, 91) besteht und die das Kniehebelgelenk (94) belastende Feder (95) so gerichtet ist, daß diese jeweils in den Endlagen des Kniehebels mit dem kurzen Hebel (91) einen stumpfen Winkel einschließt und beim Verschwenken des Auslegers (76) eine mit dem kürzeren Hebel (91) fluchtende Linie durchwandert.

39. Kreiselmäher nach einem der Ansprüche 36 bis 38, dadurch gekennzeichnet, daß durch Anheben des Handlenkers der Ausleger (76) um seinen Anlenkpunkt knickbar und der kürzere Hebel (91) des Kniehebels in der eingeknickten Stellung selbsttätig in einer Rastausnehmung (92) fixierbar ist.

40. Kreiselmäher nach einem der Ansprüche 36 bis 39, dadurch gekennzeichnet, daß die Arretierung (92) des kurzen Hebels (91) des Kniehebels vom Handlenker aus lösbar ist.

41. Kreiselmäher nach einem der Ansprüche 36 bis 40, dadurch gekennzeichnet, daß der Handlenker höhenverstellbar und in mindestens zwei Stellungen fixierbar ausgeführt ist.

## Claims

1. A rotary mower comprising a frame (1, 2, 3, 5) and a disc (6, 7), which is mounted in said frame and driven to rotate about a substantially vertical axis (3, 4) and is provided with cutting knives (8), which extend are regularly spaced around the periphery of the disc and protrude beyond the radius of the disc, also comprising teeth, which are secured to the frame adjacent to the forward half of the disc (6, 7) and overlap the forward half of the flight circle of and cooperate with the cutting knives (8) and face substantially in the cutting direction and consist of spaced apart U-shaped fingers (20), which are parallel to that diameter of the disc (6, 7) which faces in the mowing direction, wherein the legs (24, 25) of said fingers are vertically aligned, one of said legs (25) is secured to a carrier (2), which is secured to the frame. The legs extend on opposite sides of the flight circle of the cutting knives (8) and are connected on the outside by webs (26) and are sufficiently spaced from the cutting knives (8) that the latter can move between the legs (24, 25) without contacting them, characterized in that two discs (6, 7), which are driven to rotate in opposite senses, and a bottom plate (2) are provided, the bottom plate (2) is fixed to the frame and constitutes the carrier and is formed with forward semicircular recesses, which have a larger radius than the cutter discs (6, 7), and the upper legs (24, 60) of the fingers (20) overlap the cutting knives above the same and are shorter in the intermediate portion (a) of the cutting region than at the edge portions of the cutting region or are entirely omitted.

2. A rotary mower according to claim 1, characterized in that the underside carrier or the bottom plate (2) is provided with sliding bars (23), which are parallel to the fingers (20), or with sliding soles.

3. A rotary mower according to claim 1 or 2, characterized in that the lower legs (25) of the fingers (20) are secured to the bottom plate (2).

4. A rotary mower according to any of claims 1 to 3, characterized in that the web (26) connecting the legs (24, 25) of the fingers (20), tapers to a point in the direction of travel (mowing direction).

5. A rotary mower according to any of claims 1 to 4, characterized in that the height of the slot defined between the legs (24, 25) is about 1/4 to 1/3 of the distance between the fingers.

6. A rotary mower according to any of claims 1 to 5, characterized in that the fingers (20) are approximately equally spaced apart in the middle portion of the forward half of the flight circle of the cutting knives (39) and they have a smaller spacing from each other and a larger length in the side portions.

7. A rotary mower according to any of claims 1 to 6, characterized in that an intermediate, shorter finger (22) is arranged between the two counter-rotating discs (6, 7) in the generally triangular space defined by the almost contacting or overlapping flight circles of the knives, and the legs of said finger define a slot for the passage for the knives and have edge portions which obliquely converge toward the adjacent fingers.

8. A rotary mower according to any of claims 1 to 7, characterized in that at least three cutting knives (39) extend at the periphery of the disc (6, 7) approximately parallel to the bottom plate (2) and have knife edges (50) which include an acute angle with the tangent to their root circle and are disposed approximately midway between the legs (24, 25) of the fingers (20).

9. A rotary mower according to any of claims 1 to 8, characterized in that the knife holders (31) are articulatedly connected to the disc (6, 7) and are so controlled by an eccentric (51) that cutting knife edges (50) of the knives includes an acute angle with the tangent to the root circle of the cutting knives in the entrance regions for the fingers and the knife edges (50) assume an approximately radial position in the intermediate region.

10. A rotary mower according to any of claims 1 to 9, characterized in that a control ring (52) for controlling the knife holders (31) is eccentrically mounted with respect to the axis of rotation (3, 4) of the knifecarrying disc (6, 7) and is rigidly connected to an arm (53), which at its end is articulatedly connected to a control lever (55) for pivotally moving the knife holder (54), and the control levers (55) of the remaining cutting knife holders (54) are articulatedly connected to arms (56) which at their other ends are pivoted to the control ring (52).

11. A rotary mower according to any of claims 1 to 10, characterized in that each cutting knife (39) is held in a knife holder (31), which comprises a platelike supporting member (40) having a planar forward face (41) in contact with the knife blade (39), and a beveled wedgewhaped rear face (44), and a retaining member (43), which is pivoted to the supporting member (40), the retaining member (43) is U-shaped and is movable over the supporting member (44) in such a manner that one leg when sliding over the bevelled surface (44) forces the other leg against the forward face (41) of the supporting member (40) and the other leg, the supporting member (40) is provided adjacent to the pivotal axis of the retaining member (43) with a stop (49) for the blade (39), and the blade (39) is provided with a bore, which receives a pin (45) that is secured to the other leg of the retaining member (43).

12. A rotary mower according to any of claims 1 to 11, characterized in that the cutting knives consist of thin steel blades (39), which are approximately rectangular and have at their centre a bore (46), the ends of the blades (39) are provided with stop-forming recesses (47, 48), and two opposite and relatively staggered longitudinal sides constitute knife edges (50).

13. A rotary mower according to any of claims 1 to 12, characterized in that the knife holders (31) are pivoted on pins (32) of the cutter disc (6, 7) and are provided each with a lever arm (33), which protrudes beyond the pin (32) and is articulatedly connected to a lever (34), which is axially slidably guided in its pivotal mounting (35), and the articulated joint between the two levers (33, 34) is resiliently urged against a stop (38), which is fixed to the disc.

14. A rotary mower according to any of claims 1 to 13, characterized in that the cutter disc (6, 7) or a sheet metal element (30) which covers the cutter disc extends close to the free ends of the upper legs (24) of the fingers (20), which conform to the circular configuration, and the edge of the cutter disc or of the covering sheet metal element is flanged downwardly toward the bottom plate (2).

15. A rotary mower according to any of claims 1 to 14, characterized in that the cutter discs are provided with circular or polygonal top pieces (9, 10), which are conically tapered in an upward direction, and the drive means are disposed above said top pieces.

16. A rotary mower according to any of claims 1 to 15, characterized in that the conical top pieces have radially protruding ribs or have webs (11, 12) which helically rise in the peripheral direction, and said ribs or webs extend over the edge of the cutter disc or of the covering sheet metal element.

17. A rotary mower according to any of claims 1 to 16, characterized in that the conical top pieces are provided at their periphery closely above the cutter disc with apertures, which are covered on the inside by a stationary shield (59) approximately over one-third of the periphery, and at least two fan blades (57) are attached in the top piece (9, 10) above the apertures.

18. A rotary mower according to any of claims 1 to 17, characterized in that two or more sliding soles, which are adapted to be inserted and to be locked by a cotter pin, are secured to the underside of the bottom plate (2).

19. A rotary mower according to any of claims 1 to 18, characterized in that swath-formers, which have an adjustable inclination relative to the direction of travel, are secured to the upper carrier (1) and extend close to the peripheries of the top pieces (9, 10).

20. A rotary mower according to any of claims 1 to 19, characterized in that bolts or bores or the like means for connection to the ground wheel axle of a powerdriven implement or to a lifting gear frame of a tractor are provided on the frame or on a lateral supporting carrier (5).

21. A rotary mower according to any of claims 1 to 20, characterized in that the knives (39) are secured to the top side of the knife-carrying disc (62).

22. A rotary mower according to claim 21, characterized in that a weblike bracket (63) for holding each knife (39) is connected to the cutter disc (62) and extends approximately radially to said disc and rises from the disc at right angles thereto, the knife has a rear engaging surface (70) bearing on said bracket, and said bracket carries a pivot pin (64), which is parallel to the cutter disc (62), a pivoted lever (65) is movably mounted on said pivot pin and spring-biased toward the cutter disc and is provided with a locking pin (66), which extends through an intermediate bore of the knife (39) and in order to lock the knife extends into a recess (68) formed in the edge of the cutter disc (62) or into a bore of said disc.

23. A rotary mower according to claim 21 or 22, characterized in that the pivoted lever (65) consists of a flat iron bar, which at its outer end (67) is curved in the sense of rotation.

24. A rotary mower according to any of claims 21 to 23, characterized in that a winglike flat iron

9

bar (68'), which is curved opposite to the sense of rotation, (A) is connected to the top of the pivoted lever (65).

25. A rotary mower according to any of claims 21 to 24, characterized in that the knife edges of the knives (39) extend in a trailing direction with respect to the sense of rotation.

26. A rotary mower according to claim 25, characterized in that the knife edges of the knives (39) include an angle of about 20 to 25 degrees with a diameter (61) of the knife-carrying disc (62).

27. A rotary mower according to any of claims 21 to 26, characterized in that the peripheral edge of the cutter disc (62) is bevelled to taper to a point.

28. A rotary mower according to any of claims 21 to 27, characterized in that deflectors are provided on the underside of the cutter disc (62).

29. A rotary mower according to any of claims 21 to 28, characterized in that the bottom plate (73) is bevelled toward the cutter disc (62).

30. A rotary mower according to any of the preceding claims, characterized in that a central carrier (76) constitutes a boom and is centrally connected to the upper crossbeam (75) of the mower frame, said carrier is centrally secured to a wheel axle (79), which is provided with two wheels (81) driven by a motor (78), the drive means for transmitting the drive from the motor (78) to the cutter discs are arranged in the carriers (75,76), the distance between the insides of the wheels (81) corresponds to the width of the swath, the wheels are closely adjacent to the cutter discs, and the wheel axle (79) is provided with bent handles (82, 83) on that side which is opposite to the mowing mechanism.

31. A rotary mower according to claim 30, characterized in that the wheels (81) are provided on their inside with funnel- or disc-shaped coverings having peripheral edges which are secured to the rims for the tyres on the inside of said tyres.

32. A rotary mower according to claim 31, characterized in that the funnel-shaped coverings consist of respective rim discs (84).

33. A rotary mower according to any of claims 30 to 32, characterized in that the driving axles of the wheels (81) are operatively connected by speed-reducing gear trains to the driving shafts, which are disposed in the axle (79) and are arranged in housings which constitute legs (80).

34. A rotary mower according to any of claims 30 to 33, characterized in that the carrier (76) which is connected to the gear train block (77) or to the wheel axle (79) is bipartite in such a manner that one part is capable of a limited pivotal movement relative to the other about the common longitudinal axis.

35. A rotary mower according to any of claims 30 to 34, characterized in that the means for driving the cutter discs are accommodated in the upper crossbeam (75) of the mower, and the drive is transmitted by three angle drives (85, 86, 87), which are preferably identical.

36. A rotary mower according to any of claims 30 to 35, characterized in that the carrier (76) is pivoted above the wheel axle (79) and the driving shaft is provided with a double universal joint (89).

37. A rotary mower according to any of claims 30 to 36, characterized in that when the mower is in operative position the boom (76) is supported by a support (88), which is fixedly connected to the wheel axle (79) or to the gear train block (77), and the boom is held against the support (88) by an almost fully extended, spring-biased toggle joint (90, 91).

38. A rotary mower according to claim 37, characterized in that the toggle joint consists of two levers (90, 91), which differ in length and the spring (95) which biases the hinge (94) of the toggle joint extends in such a direction that in each end position of the toggle joint the spring includes an obtuse angle with the short lever (91) and during the pivotal movement of the boom (76) the spring moves through a line that is aligned with the shorter lever (91).

39. A rotary mower according to any of claims 36 to 38, characterized in that the handle bar can be raised to raise the boom (76) about its pivot and the shorter arm (91) of the toggle joint is adapted to be automatically fixed in a latching recess (92) when the boom is in its raised position.

40. A rotary mower according to any of claims 36 to 39, characterized in that the short lever (91) of the toggle joint is adapted to be unlocked (92) by an operation performed at the handle bar.

41. A rotary mower according to any of claims 36 to 40, characterized in that the handle bar is adjustable in height and adapted to be fixed in at least two positions.

**Revendications**

1. Faucheuse à rotors comportant au moins un disque (6, 7) qui est logé dans le bâti en forme de cadre (1, 2, 3, 5) de la faucheuse et est entraîné en tournant autour d'un axe (3, 4) essentiellement vertical, disque qui est pourvu en sa périphérie à distances régulières de couteaux (8) dépassant le rayon du disque, comportant par ailleurs des dents fixées au bâti au niveau de la moitié avant du disque (6, 7), qui recouvrent le demi-cercle avant décrit par les couteaux (8), sont orientées essentiellement en direction de la coupe et coopèrent avec les couteaux (8), dents qui consistent en doigts en forme de U (20) disposés de manière espacée l'un de l'autre, parallèlement à la ligne de diamètre du disque (6, 7) dirigées dans le sens de la fauche, doigts en forme de U dont les branches (24, 25) sont superposées en sens vertical et dont une branche (25) est fixée à un support (2) solidaire du bâti, les branches enserrant à la manière d'une fourchette l'anneau circulaire décrit par les couteaux (8), le dos de raccordement étant à l'extérieur, et ayant une distance telle des couteaux (8) que ceux-ci puissent se mouvoir, sans les toucher, entre les branches (24, 25), caractérisée en ce que sont prévus deux disques (6, 7) entraînés en sens contraire et une plaque de fond (2) solidaire du bâti et formant le support, que la plaque de fond (2) est pourvue d'indentations avant semi-circulaires dont le rayon est supérieur à celui des disques à couteaux (6, 7) et que les branches (24, 60) supérieures des doigts (20) recouvrant les couteaux (8, 39) dans la zone médiane (a) de la zone de coupe sont plus courtes que dans les zones marginales de la zone de coupe ou sont entièrement supprimées.

2. Faucheuse à rotors selon la revendication 1 caractérisée en ce que le support de fond ou la plaque de fond (2) sont pourvus de patins (23) ou de semelles de glissement parallèles aux doigts (20).

3. Faucheuse à rotors selon la revendication 1 ou 2 caractérisée en ce que les branches (25) inférieures des doigts (20) sont fixées à la plaque de fond (2).

4. Faucheuse à rotors selon l'une des revendications 1 à 3 caractérisée en ce que le dos (26) des doigts (20) reliant les branches (24, 25) devient plus pointu en direction de la marche (sens de la fauche).

5. Faucheuse à rotors selon l'une des revendications 1 à 4 caractérisée en ce que la fente formée entre les branches (24, 25) a une hauteur qui est d'environ 1/4 à 1/3 de la distance des doigts entre eux.

6. Faucheuse à rotors selon l'une des revendications 1 à 5 caractérisée en ce que les doigts (20) dans la zone médiane du demi-cercle avant décrit par les couteaux (39) sont espacés d'une distance égale et dans les zones latérales sont espacés d'une distance plus faible et ont une longueur supérieure.

7. Faucheuse à rotors selon l'une des revendications 1 à 6 caractérisée en ce que entre les disques (6, 7) tournant en sens opposé est disposé, dans les coins formés par les cercles de couteaux se touchant presque et chevauchant légèrement, un doigt (22) plus court dont les branches délimitant la fente de couteaux possèdent des arêtes disposées de manière oblique dirigées vers les doigts voisins.

8. Faucheuse à rotors selon l'une des revendications 1 à 7 caractérisée en ce que sont disposés sur la périphérie du disque (6, 7) au moins trois couteaux (39) à peu près parallèles à la plaque de fond (2) dont les lames (50) déterminent avec la tangente de leur cercle de base un angle aigu et se trouvent à peu près au milieu entre les branches (24, 25) des doigts (20).

9. Faucheuse à rotors selon l'une des revendications 1 à 8 caractérisée en ce que les porte-couteaux (31) sont liés par une articulation au disque (6, 7) et sont commandés par un excentrique (51) de manière à ce que les lames de couteaux (50) dans la zone d'entrée des séries de doigts déterminent avec la tangente du cercle de base des couteaux un angle aigu et prennent dans la zone médiane une position à peu près radiale.

10. Faucheuse à rotors selon l'une des revendications 1 à 9 caractérisée en ce que pour la commande des porte-couteaux (31) est prévu un anneau de commande (52) disposé de manière excentrique par rapport à l'axe de rotation (3, 4) du disque à couteaux (6, 7) et comportant un bras (53) relié à l'anneau de manière rigide, dont l'extrémité est reliée par une articulation à un levier de commande (55) pivotant le porte-couteau (54), et que les leviers de commande (55) des autres porte-couteaux (54) sont reliés par une articulation à des bras dont les autres extrémités sont liées par une articulation à l'anneau de commande (52).

11. Faucheuse à rotors selon l'une des revendications 1 à 10 caractérisée en ce que les couteaux (39) sont tenus chacun dans un porte-couteaux (31) consistant en une pièce d'appui (40) en forme de plaque avec une partie avant plane (41) contre laquelle s'appuie la lame de couteaux (39), et en une partie arrière (44) chanfreinée en forme de coin et en une pièce de fixation (34) reliée de manière pivotante à la pièce d'appui (40), que la pièce de fixation (34) a une section en forme de U et peut être déplacée au-dessus de la pièce d'appui (44) de manière à ce qu'une branche tende en glissant par-dessus la surface chanfreinée (44) l'autre branche contre la partie avant (41) de la pièce d'appui (40) et coince la lame de couteaux (39) entre la pièce d'appui (40) et l'autre branche, que la pièce d'appui (40) au niveau de l'axe de pivotement de la pièce de fixation (34) est pourvue d'une butée (49) pour la lame (39) et la lame (39) d'un alésage dans lequel s'engage un boulon (45) fixé sur l'autre branche de la pièce de fixation (43).

12. Faucheuse à rotors selon l'une des revendications 1 à 11 caractérisée en ce que les couteaux consistent en lames d'acier minces (39) qui possèdent une forme approximativement rectangulaire et qui comportent en leur milieu un alésage (46), que les extrémités des lames (39) sont pourvues d'échancrures (47, 48) formant des butées et que deux côtés longs décalés et opposés sont formés comme tranchants (50).

13. Faucheuse à rotors selon l'une des revendications 1 à 12 caractérisée en ce que les porte-couteaux (31) sont logés de manière articulée autour de tenons (32) du disque à couteaux (6, 7) et sont pourvus d'un bras de levier (33) dépassant le tenon (32) qui est relié de manière articulée à un levier (34) qui est guidé de manière à pouvoir être déplacé dans le sens axial dans son support pivotant, et que le raccordement articulé des deux leviers (33, 34) est tenu par un ressort contre une butée (38) solidaire du disque.

14. Faucheuse à rotors selon l'une des revendications 1 à 13 caractérisée en ce que le disque à couteaux (6, 7) ou une tôle (30) recouvrant le disque à couteaux avance directement jusqu'à l'extrémité libre des branches supérieures des doigts (20) qui sont adaptées à la forme circulaire et que le bord du disque à couteaux ou de la tôle de couverture est replié vers le bas et orienté vers la plaque de fond (2).

15. Faucheuse à rotors selon l'une des revendications 1 à 14 caractérisée en ce que les disques à couteaux sont pourvus de cloches (9, 10) circulaires ou pluri-angulaires se rétrécissant coniquement vers le haut et que les moyens d'entraînement sont disposés au-dessus de ces cloches.

16. Faucheuse à rotors selon l'une des revendications 1 à 15 caractérisée en ce que les cloches coniques sont pourvues de rainures radiales en saillie ou de baguettes (11, 12) montant en spirale dans le sens de rotation qui sont guidées pardessus le bord du disque à couteaux ou de la tôle de couverture.

17. Faucheuse à rotors selon l'une des revendications 1 à 16 caractérisée en ce que sont disposées des perçages sur la périphérie des cloches coniques immédiatement au-dessus du disque à couteaux, perçages qui du côté intérieur sont recouverts à peu près sur un tiers de la circonférence par un écran fixe (59) et qu'à l'intérieur dans la partie de la cloche (9, 10) située au-dessus sont montées au moins deux ailettes de ventilateur (57).

18. Faucheuse à rotors selon l'une des revendications 1 à 17 caractérisée en ce que sur la face inférieure de la plaque de fond (2) sont fixées deux ou plusieurs semelles de polissage embrochables et assurées par une clavette.

19. Faucheuse à rotors selon l'une des revendications 1 à 18 caractérisée en ce que sur le support (1) supérieur par rapport au sens de la marche peuvent être fixés des andaineurs réglables en inclinaison qui arrivent directement jusqu'au manteau des cloches (9, 10).

20. Faucheuse à rotors selon l'une des revendications 1 à 19 caractérisée en ce que sur le cadre ou à un montant latéral (5) des boulons ou alésages ou éléments semblables sont prévus pour le raccordement à l'essieu moteur d'un engin motorisé ou au cadre du treuil de levage d'un tracteur.

21. Faucheuse à rotors selon l'une des revendications 1 à 20 caractérisée en ce que les couteaux (39) sont fixés sur le côté supérieur du disque à couteaux (62).

22. Faucheuse à rotors selon la revendication 21 caractérisée en ce que pour la fixation de chaque couteau (39) sur le disque à couteaux (62) une pièce de support (63) en forme de barrette est placée debout à peu près dans le sens radial et à angle droit sur le disque, sur laquelle le couteau s'appuie par sa surface d'appui arrière (70) et qui porte un boulon de palier (64) parallèle au disque à couteaux (62), sur lequel s'appuie un levier de pivotement (65) en direction du disque à couteaux (62), qui est chargé par un ressort, et est pourvu d'un boulon de verrouillage (66) qui s'engage à travers un alésage central du couteau (39) et, pour le verrouillage de celui-ci, dans une échancrure du bord (68) ou dans un alésage du disque à couteaux (62).

23. Faucheuse à rotors selon les revendications 21 ou 22 caractérisée en ce que le levier pivotant (65) consiste en un fer plat courbé en son extrémité extérieure (67) dans la direction de rotation.

24. Faucheuse à rotors selon l'une des revendications 21 à 23 caractérisée en ce qu'un fer plat (68') semblable à une ailette et courbé dans le sens opposé à la rotation (A) est raccordé au côté supérieur du levier pivotant (65).

25. Faucheuse à rotors selon l'une des revendications 21 à 24 caractérisée en ce que les lames des couteaux (39) prennent une position retardée par rapport au sens de la rotation.

26. Faucheuse à rotors selon la revendication 25 caractérisée en ce que les tranchants des couteaux (39) déterminent avec la ligne du diamètre (61) du disque à couteaux (62) un angle d'environ 20° à 25°.

27. Faucheuse à rotors selon l'une des revendications 21 à 26 caractérisée en ce que le bord de la périphérie du disque à couteaux (62) est biseauté.

28. Faucheuse à rotors selon l'une des revendications 21 à 27 caractérisée en ce que sur le côté inférieur du disque à couteaux (62) des déflecteurs sont disposés.

29. Faucheuse à rotors selon l'une des revendications 21 à 28 caractérisée en ce que la plaque de fond (73) est biseautée en direction du disque à couteaux (62).

30. Faucheuse à rotors selon l'une des revendications précédentes caractérisée en ce qu'à la traverse supérieure (75) du bâti de faucheuse est raccordé au centre un support central (76) formant un avant-bras qui est fixé au centre d'un essieu (79) pourvu de deux roues (81) entraînées par un moteur (78), que dans les supports (75, 76) sont disposés les dispositifs d'entraînement qui transmettent l'entraînement du moteur (78) au disque à couteaux, que la distance entre les côtés intérieurs des roues (81) correspondant à la largeur d'andain, que les roues avoisinent directement les disques à couteaux et que l'essieu (79) sur son côté opposé au dispositif de coupe est pourvu de poignées en arceau (82, 83).

31. Faucheuse à rotors selon la revendication 30 caractérisée en ce que les côtés intérieurs des roues (81) présentent des couvercles en forme d'entonnoir ou de disque dont les bords de périphérie sont raccordés au niveau des côtés intérieurs des pneus aux jantes de ceux-ci.

32. Faucheuse à rotors selon la revendication 31 caractérisée en ce que les couvercles en forme d'entonnoir consistent en un disque de jante (84).

33. Faucheuse à rotors selon l'une des revendications 30 à 32 caractérisée en ce que les arbres primaires des roues (81) sont en prise d'entraînement par l'intermédiaire d'un renvoi avec les arbres de commande disposés dans l'essieu, arbres de commande qui sont logés dans des boîtiers formant des bras (80).

34. Faucheuse à rotors selon l'une des revendications 30 à 33 caractérisée en ce que le support (76) relié au carter de la boîte de vitesses (77) ou à l'essieu (79) est formé en deux parties de manière à ce qu'une partie peut être pivotée dans certaines limites par rapport à l'autre autour de l'axe longitudinal commun.

35. Faucheuse à rotors selon l'une des revendications 30 à 34 caractérisée en ce que les moyens d'entraînement pour les disques à couteaux sont logés dans la traverse (75) supérieure du dispositif de coupe et que l'entraînement se fait par le truchement de trois engrenages angulaires (85, 86, 87) formés de préférence uniformément.

36. Faucheuse à rotors selon l'une des revendications 30 à 35 caractérisée en ce que le support (76) est logé de manière pivotante au-dessus de l'essieu (79) et que l'arbre de commande possède en son articulation un joint à double cardan (89).

37. Faucheuse à rotors selon l'une des revendications 30 à 36 caractérisée en ce que l'avant-bras (76) dans la position de travail du dispositif de coupe s'appuie sur une assise (88) fermement liée à l'essieu (79) ou au bloc de boîte de vitesses (77) et est tenu contre l'assise (88) par un levier à genouillère (90, 91) presque étendu chargé par un ressort.

38. Faucheuse à rotors selon la revendication 37 caractérisée en ce que le levier à genouillère consiste en deux leviers (90, 91) de longueur inégale et que le ressort (95) chargeant le levier à genouillère (94) est orienté de manière à décrire un angle obtus avec le levier court (91) lorsque le levier à genouillère est dans ses positions terminales et lorsque l'avant-bras (76) est pivoté traverse une ligne alignée sur le levier plus court (91).

39. Faucheuse à rotors selon l'une des revendications 36 à 38 caractérisée en ce qu'en levant le guidon l'avant-bras (76) peut être replié en son articulation et que, dans la position repliée, le levier plus court (91) du levier à genouillère peut être arrêté automatiquement dans un cran d'encliquetage.

40. Faucheuse à rotors selon l'une des revendications 36 à 39 caractérisée en ce que le blocage (92) du levier court (91) du levier à genouillère peut être dégagé à partir du guidon.

41. Faucheuse à rotors selon l'une des revendications 36 à 40 caractérisée en ce que le guidon est exécuté de manière à pouvoir être réglé en hauteur et bloqué dans au moins deux positions.

## Fig 1

## Fig 2

Fig 3

Fig 4

Fig 5

Fig 6

Fig 7

Fig 8

Fig 9

Fig 10

Fig 11

**Fig 12**

**Fig 13**

0 057 936

Fig 14

Fig 15

6

Fig 16